# DEMANDE DE BREVET EUROPEEN

(11) **EP 1 134 657 A1**
(43) Date de publication de la demande: **19.09.2001**
(21) Numéro de dépôt: 01400659.7
(22) Date de dépôt: 13.03.2001
(51) Int. Cl.: G06F 9/46

(54) **Systéme informatique de calcul et procédé de calcul mis en oeuvre au moyen d'un tel système**

(30) Priorité: 17.03.2000 FR 0003481
(71) Demandeur: LIPHA, 69008 Lyon (FR)
(72) Inventeur: Viollet, Edouard, 69003 Lyon (FR); Convard, Thierry, 69580 Sathonay Camp (FR); Barbanton, Jacques, 69530 Brignais (FR)
(74) Mandataire: Habasque, Etienne Joel Jean-François

(57) **Abrégé**

Ce système informatique de calcul comprend un ensemble de calculateurs (12,..., 22) montés en réseau dans chacun desquels est stockée au moins une application de calcul, et une machine (10) de stockage de données de calcul raccordée au réseau et en communication avec les calculateurs, au moins l'un (12) des calculateurs fonctionnant en calculateur maître et au moins une partie des autres calculateurs (14,..., 22) fonctionnant en calculateur esclave. L'un au moins des calculateurs comporte, stockés en mémoire, un algorithme de configuration des autres calculateurs du réseau en calculateur esclave et une application maître exécutable pour la gestion des taches de chaque calculateur esclave (14,..., 22) en fonction de leur disponibilité pour l'affectation à chacun de ceux-ci de taches de calcul et de données de calcul correspondantes qui sont stockées dans la machine (10) de stockage.

## Description

La présente invention se rapporte à un système informatique de calcul et à un procédé de calcul utilisant un tel système et, en particulier, à un procédé de calcul utilisé pour le calcul de modélisations moléculaires.

Par exemple, dans une telle application, pour le traitement d'environ 63000 molécules, à raison de 1000 conformations par molécule, la durée de traitement peut aller jusqu'à seize mois sur une machine monoprocesseur.

Pour pallier cet inconvénient, on utilise un système informatique de calcul du type comprenant un ensemble de calculateurs montés en réseau dans chacun desquels est stockée une application de calcul, et une machine informatique de stockage de données de calcul raccordée au réseau et en communication avec les calculateurs.

L'un des calculateurs peut être utilisé en tant que calculateur maître, les autres calculateurs fonctionnant en tant que calculateur esclave.

Cet agencement permet de réduire considérablement la durée de traitement. Il n'est cependant pas acceptable dans la mesure où pour augmenter la vitesse de traitement il convient d'augmenter le nombre de calculateurs, ce qui engendre une augmentation de coût prohibitive.

En outre, le système doit être totalement reconfiguré lorsque l'on désire rajouter des calculateurs au système.

Le but de l'invention est de pallier cet inconvénient.

Elle a donc pour objet un système informatique de calcul du type précité, caractérisé en ce que l'un au moins des calculateurs comporte, stockés en mémoire, un algorithme de configuration des autres calculateurs du réseau en calculateur esclave, et d'affectation, à chacun de ceux-ci, de taches de calcul et de données de calcul correspondantes qui sont stockées dans la machine de stockage, et une application maître exécutable pour la gestion des taches de chaque calculateur esclave en fonction de leur disponibilité et la récupération des données résultant de l'exécution en parallèle des applications de calcul.

Ainsi, et contrairement à l'état de la technique, le parallélisme n'est pas incorporé au niveau de l'application de calcul elle-même mais à un niveau logiciel supérieur indépendant. On obtient ainsi un parallélisme de taches et non pas un parallélisme logiciel, les calculateurs esclaves réalisant des taches toutes identiques mais à partir de données différentes.

Le système informatique de calcul selon l'invention peut en outre comporter une ou plusieurs des caractéristiques suivantes, prises isolément ou selon toutes les combinaisons techniquement possible :
- ledit algorithme de configuration et ladite application maître sont chargés dans chaque calculateur du réseau, l'exécution dudit algorithme de configuration par l'un des calculateurs constituant un moyen de configuration de ce dernier en calculateur maître,
- chaque calculateur comporte en outre une application esclave exécutable sous le contrôle du calculateur maître, lorsque ce calculateur est configuré en calculateur esclave, ladite application esclave comportant des moyens logiciels pour dialoguer avec la machine de stockage,
- lesdits moyens logiciels pour dialoguer avec la machine de stockage comporte des moyens pour l'échange de données selon un protocole de transfert de fichiers,
- chaque calculateur maître comporte, stockés en mémoire, une signature électronique et des moyens de comparaison entre ladite signature et une signature électronique d'un calculateur esclave avec lequel il communique pour autoriser le lancement de l'application de calcul par ce dernier,
- l'algorithme de configuration comporte des moyens logiciel d'élaboration d'une interface homme machine convenant pour être affichée sur un écran de chaque calculateur pour la configuration desdits calculateurs.

L'invention a également pour objet un procédé de calcul au moyen d'un système informatique tel que défini ci-dessus, caractérisé en ce qu'il comporte les étapes de :
- définition d'au moins un groupe de calculateurs par configuration pour chacun d'eux, de l'un des calculateurs en calculateur maître et des autres calculateurs en calculateurs esclaves ;
- affectation, à chacun des calculateurs esclaves, d'une ou plusieurs applications de calcul et de données de calcul correspondantes ,
- comparaison d'une signature électronique transmise par chaque calculateur esclave au calculateur maître avec une signature correspondante stockée dans cette dernière ; et, en cas de correspondance entre lesdites signatures :

- lancement, pour chaque calculateur esclave de la ou des applications de calcul en fonction de leur disponibilité, en utilisant les données de calcul correspondantes ; et
- récupération des données résultant de l'exécution des applications réalisées en parallèle, dans chaque calculateur esclave.

Enfin, l'invention a pour objet un procédé de calcul tel que définit ci-dessus, pour des calculs de modélisation moléculaire à partir de données moléculaires stockées dans un serveur de données.

D'autres caractéristiques et avantages ressortiront de la description suivante, donnée uniquement à titre d'exemple, et faite en référence aux dessins annexés sur lesquels :
- la figure 1 est une vue schématique du système informatique de calcul selon l'invention ;
- la figure 2 est un schéma montrant l'architecture logicielle du système informatique de la figure 1;
- la figure 3 est un schéma montrant les différents niveaux logiciels du système informatique selon l'invention ;
- la figure 4 montre une interface graphique disponible au niveau du calculateur maître pour la configuration du système informatique ; et
- la figure 5 est un algorithme montrant les principales phases du procédé de calcul utilisant le système informatique conforme à l'invention.

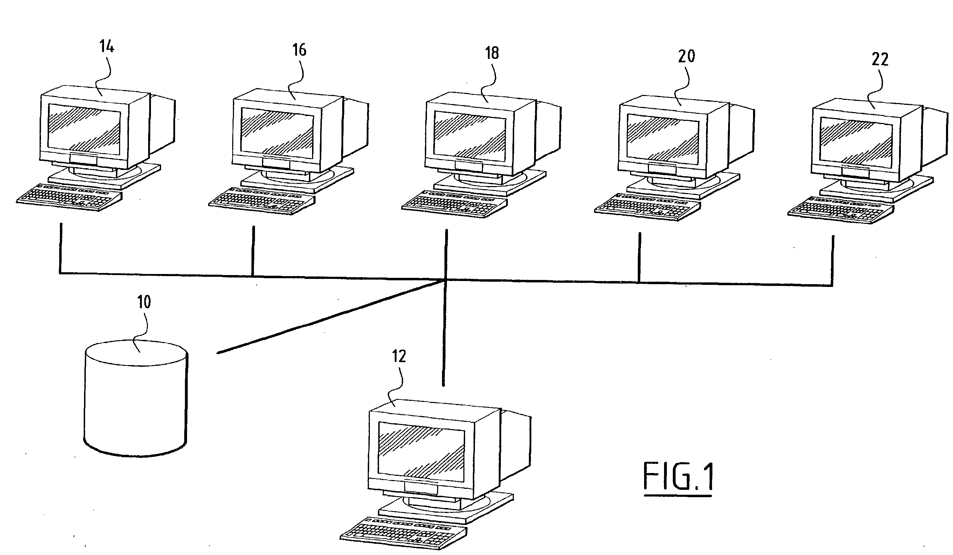

Sur la figure 1, on a représenté, de façon schématique, la structure d'un système informatique de calcul conforme à l'invention.

Par exemple, ce système est utilisé pour réaliser des calculs de modélisations moléculaire à partir de données stockées dans une machine informatique 10 de stockage de données, ou serveur de données.

Comme on le voit sur cette figure 1, le système comporte un ensemble de calculateurs 12, 14, 16, 18, 20 et 22 montés en réseau, auquel est raccordée la machine de stockage 10, et fonctionnant en parallèle sous le contrôle d'un calculateur maître.

Dans l'exemple de réalisation représenté sur la figure 1, l'un des calculateurs 12, fonctionne en tant que calculateur maître, les autres calculateurs 14, 16, 18, 20 et 22 fonctionnant en tant que calculateurs esclaves.

Une ou plusieurs applications de calcul est stockée dans chacun des calculateurs, et en particulier dans les calculateurs fonctionnant en tant qu'esclave.

On notera que l'application de calcul est constituée par un algorithme de calcul classique, donc interchangeable, approprié pour l'utilisation envisagée.

Elle ne sera donc pas décrite en détail par la suite.

On notera cependant que, dans l'application envisagée, l'application de calcul est capable de réaliser des opérations de calcul de modélisation moléculaire à partir de données extraites de la machine de stockage 10.

Ainsi, selon la configuration envisagée, le calculateur maître 12 affecte, à chacun des calculateurs esclaves 14, 16, 18, 20 et 22 une ou plusieurs applications de calcul ainsi que les données de calcul correspondantes nécessaires au fonctionnement des applications et ce, en fonction de leur disponibilité. Il récupère ensuite, après calculs, les résultats délivrés par chacun des calculateurs esclaves.

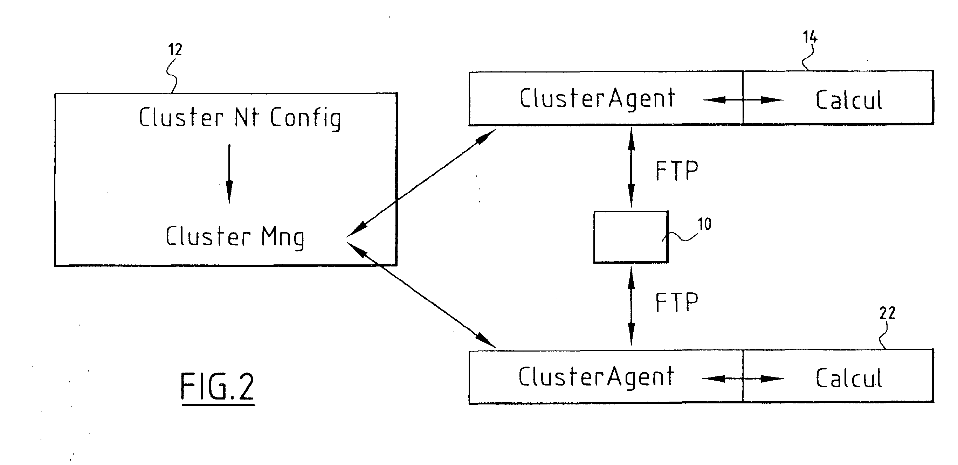

Pour procéder à cette configuration, en référence à la figure 2, sur laquelle on a représenté l'architecture logicielle du système informatique de la figure 1, le calculateur maître 12 comporte, stocké en mémoire, un premier algorithme « ClusterNtConfig » permettant la configuration de l'ensemble des calculateurs du système, et en particulier des autres calculateurs en calculateurs esclaves.

Le calculateur maître 12 comporte également, stocké en mémoire, un algorithme « ClusterMng» constituant une application logicielle maître exécutable pour la gestion des taches de chaque calculateur esclave en fonction de leur disponibilité et la récupération des données résultant de l'exécution en parallèle des applications de calcul par les calculateurs esclaves pour l'affectation, à chacun de ceux-ci, de taches de calcul et de données de calcul correspondantes qui sont stockées dans la machine de stockage 10.

Par ailleurs, chaque calculateur esclave 14, ..., 22 comporte une application esclave « ClusterAgent » exécutable sur requête du calculateur maître 12, lorsque le calculateur est configuré en esclave, pour gérer localement l'application de calcul.

Par exemple, le calculateur maître 12 et les calculateurs esclaves 14... 22 dialoguent en utilisant une application logicielle de passage de messages. Bien entendu, d'autres applications appropriées pour le transfert d'informations entre le calculateur maître et les calculateurs esclaves peuvent être utilisées en variante.

L'application esclave « ClusterAgent » de chaque calculateur esclave comporte des moyens logiciels permettant un dialogue avec la machine de stockage 10.

Par exemple, ces moyens logiciels sont adaptés pour l'échange de données selon un protocole de transfert de fichiers FTP, par exemple le protocole FTP.

On voit enfin sur la figure 2 que chaque calculateur esclave 14, ... 22 comporte également, stockée en mémoire, l'application de calcul proprement dite, assurant le calcul envisagé à partir des données extraites de la machine de stockage 10.

Les résultats de calcul provenant de chaque calculateur esclave 14, ..., 22 sont ensuite rapatriés vers la machine de stockage 10.

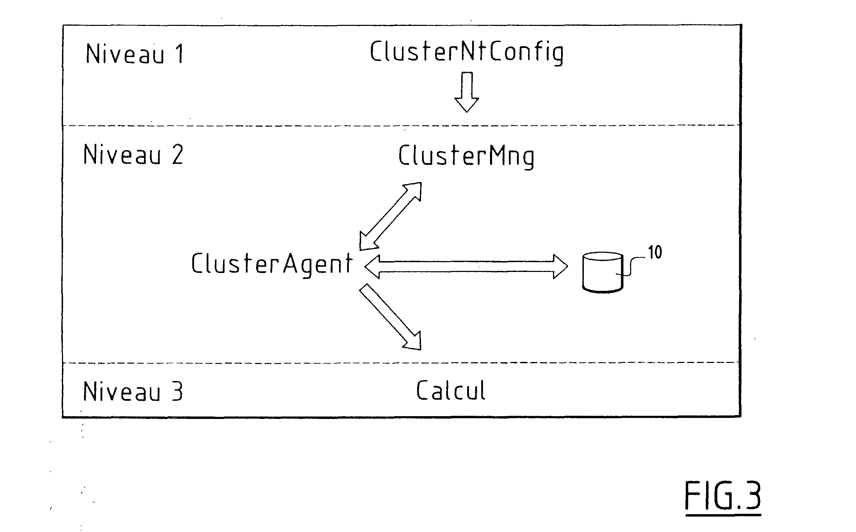

Comme on le conçoit, et comme cela est visible sur la figure 3, l'architecture logicielle qui vient d'être décrite présente une architecture multi niveaux. Ainsi, le parallélisme des taches effectuées au sein de chaque calculateur esclave 14,..., 22 est engendré, non pas au niveau des applications de calcul, mais au niveau d'une couche logicielle supérieure indépendante.

En effet, l'architecture logicielle présente un premier niveau « niveau 1 » qui intègre l'algorithme de configuration « ClusterNtConfig » et qui permet ainsi de définir un calculateur en maître, et les autres en esclave.

Un deuxième niveau, « niveau 2 », intègre l'application maître « ClusterMng » qui assure la gestion proprement dite des taches de chaque calculateur esclave en fonction de leur disponibilité. Il intègre également les applications esclaves « ClusterAgent » qui assurent la gestion locale, c'est à dire au niveau de chaque calculateur esclave, le transfert de données d'une part, et le lancement du logiciel de calcul d'autre part.

Un troisième niveau, « niveau 3 », intègre l'application de calcul proprement dite qui est lancée par chaque application esclave « ClusterAgent » pour chaque traitement à effectuer, sous le contrôle du niveau 2.

On notera que, comme mentionné précédemment, le niveau 1 constitue un niveau initial, indépendant permettant de configurer le système informatique.

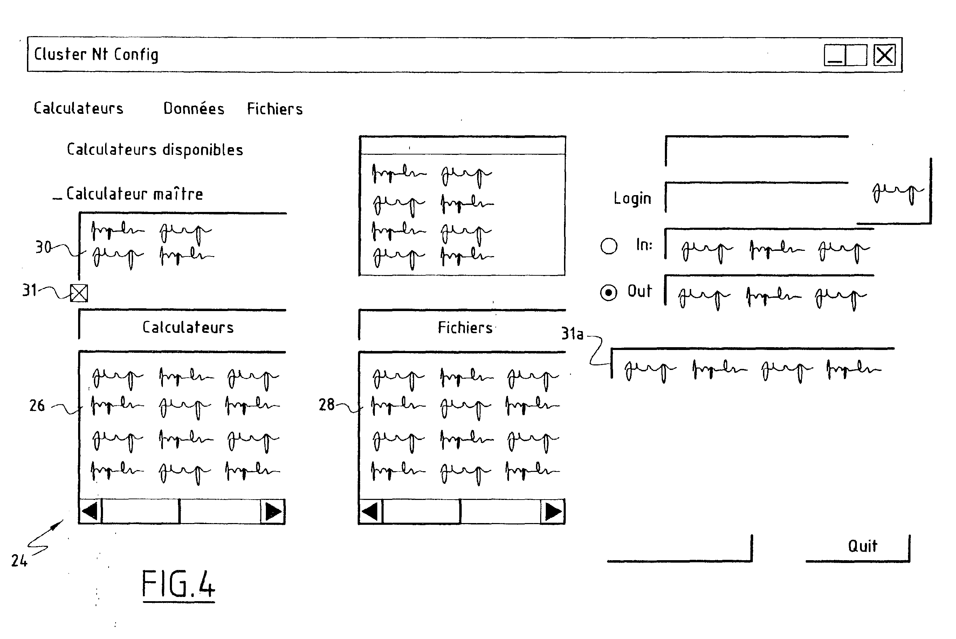

En référence à la figure 4, ce niveau logiciel permet de générer, sur l'écran du calculateur destiné à être configuré en maître, une interface graphique homme-machine 24. Cette interface comporte notamment une première zone 26 permettant de lister les calculateurs impliqués dans le système informatique ainsi qu'une zone 28 permettant de lister les fichiers de données utilisés par l'application de calcul.

Une fenêtre 30 permet d'indiquer le calculateur fonctionnant en calculateur maître.

Une case à cocher 31 permet d'indiquer si la machine maître sera aussi utilisée comme calculateur.

Une zone d'édition 31-a permet d'indiquer la ligne de commande de l'application de calcul du niveau 3 à utiliser sur chaque calculateur esclave.

Après configuration, à l'aide de cette interface, de l'ensemble des calculateurs, et exécution de l'algorithme de configuration, une transition entre le niveau 1 et le niveau 2 s'effectue.

Au cours de cette transition, on exécute l'interface logicielle de transfert de message en lui fournissant la liste des calculateurs et l'algorithme de gestion « ClusterMng » et/ou « ClusterAgent » qu'ils doivent exécuter, à savoir d'une part l'indication du calculateur qui utilise l'application logicielle maître « ClusterMng » qui est associée au calculateur maître, et l'application esclave « ClusterAgent » associée aux calculateurs esclaves.

Dans le niveau 2 de l'architecture logicielle, les calculateurs esclaves communiquent avec le calculateur maître au moyen de l'interface logicielle de transfert de message et communiquent avec la machine de stockage 10 selon le format du protocole de transfert de fichiers (FTP par exemple).

Comme mentionné précédemment, l'application esclave « ClusterAgent » réalise la gestion locale des applications de calcul et provoque, sur requête du calculateur maître 12, le lancement des applications de calcul du niveau 3 de l'architecture.

On notera cependant que l'architecture logicielle, et en particulier l'arborescence des fichiers utilisée dans le système, est reproduite à l'identique sur chaque calculateur.

Ainsi, il n'y a aucune différence d'environnement entre un calculateur maître et un calculateur esclave, un calculateur pouvant être configuré soit en tant que calculateur maître soit en tant que calculateur esclave.

On notera en effet que l'exécution de l'algorithme de configuration par l'un des calculateurs constitue un moyen de configuration de ce dernier en tant que calculateur maître.

Bien entendu le système informatique peut utiliser plusieurs calculateurs maîtres. Dans ce cas, les calculateurs esclaves qui lui sont associés ne peuvent être utilisés pour lancer des applications de calcul pour le compte d'un autre calculateur maître.

On peut ainsi utiliser un parc de machines en définissant dans celui-ci différents groupes de machines indépendantes.

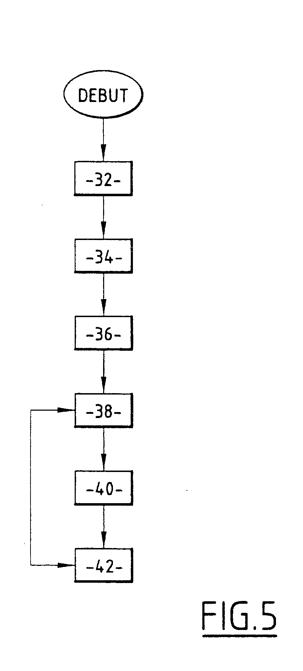

On va maintenant décrire, en référence à la figure 5 les principales phases du procédé de calcul mis en oeuvre au moyen du système informatique qui vient d'être décrit.

La première étape 32 de cette procédure correspond à la configuration de l'ensemble des calculateurs du système, en utilisant l'interface accessible sur le calculateur destiné à devenir maître.

Comme mentionné précédemment, l'exécution de l'algorithme de configuration provoque la configuration automatique du calculateur en calculateur maître.

Par ailleurs, et comme mentionné précédemment, l'exécution de cet algorithme de configuration provoque l'exécution sur la machine maître de l'application logicielle « ClusterMng » et, éventuellement, si la machine maître doit également être utilisée en tant que calculateur, de l'application esclave « ClusterAgent » et, sur toutes les machines esclaves, de l'application « ClusterAgent » (étape 34).

Lors de l'étape 36 suivante, chaque calculateur esclave transmet au calculateur maître 12 une signature électronique entre « ClusterMng » et « ClusterAgent ». Ce dernier réalise une comparaison de la signature électronique reçue avec une signature électronique correspondante stockée dans le calculateur maître, puis retourne au calculateur esclave son verdict. Cette signature permet de vérifier que tous les calculs effectués sur le groupe de calculateurs le seront avec la même version de l'application esclave « ClusterAgent » et permet d'écarter un calculateur esclave non valide.

Par exemple, la signature électronique se présente sous la forme d'un message de 256 octets, le verdict se présentant sous la forme d'un message de quatre octets.

Au cours de cette étape, si la signature de chaque calculateur esclave est correcte, chacun de ceux-ci transmet au calculateur maître un message indiquant qu'il est prêt.

Lors de l'étape 38 suivante, lorsque le calculateur maître 12 reçoit un message en provenance d'un calculateur esclave indiquant que ce dernier est prêt, il décide, en fonction du planning des taches préalablement configuré et des données à traiter, de ce que chaque calculateur esclave doit réaliser.

Si chaque calculateur esclave est disponible et qu'il reste des données à calculer, le calculateur maître lui envoie le nom de la donnée ainsi que la ligne de commande correspondante de manière à provoquer le lancement de l'application de calcul associée.

Si aucune donnée n'est disponible, le calculateur maître commande au calculateur esclave concerné de patienter. Si le calculateur concerné est indisponible pour des raisons de planification, le calculateur maître lui demande de patienter (étape 40).

Lors de l'étape 42 finale, le calculateur esclave envoie sur la machine de stockage les résultats de calculs et notifie au calculateur maître qu'il est disponible pour effectuer d'autres calculs. Le calculateur maître centralise alors, à des fins statistiques, les informations envoyées par le calculateur esclave (temps de transfert, temps d'exécution, de calculs...).

On conçoit que l'invention qui vient d'être décrite, qui utilise un nouveau logiciel indépendant pour la configuration des calculateurs du système permet d'obtenir un parallélisme de taches indépendant de l'application de calcul.

Il est ainsi possible d'augmenter aisément le nombre de calculateurs du système pour réduire la durée de traitement.

Par ailleurs, dans la mesure où il est possible de planifier lors de la configuration les taches affectées à chaque calculateur, on peut utiliser des machines d'un parc informatique qui sont inutilisées momentanément, par exemple la nuit ou en fin de semaine.

On optimise alors les ressources informatiques d'un parc d'ordinateurs montés en réseau.

## Revendications

1. Système informatique de calcul, comprenant un ensemble de calculateurs (12,..., 22) montés en réseau dans chacun desquels est stockée au moins une application de calcul, et une machine informatique (10) de stockage de données de calcul raccordée au réseau et en communication avec les calculateurs (12,...,22), au moins l'un des calculateurs (12) fonctionnant en calculateur maître et au moins une partie des autres calculateurs (14,..., 22) fonctionnant en calculateur esclave, **caractérisé en ce que** l'un au moins des calculateurs (12) comporte, stockés en mémoire, un algorithme de configuration (ClusterNtConfig) des autres calculateurs du réseau en calculateurs esclaves, et une application maître exécutable pour la gestion des taches de chaque calculateur esclave en fonction de leur disponibilité pour l'affectation, à chacun de ceux-ci, de taches de calcul et de données de calcul correspondantes qui sont stockées dans la machine (10) de stockage.

2. Système selon la revendication 1, **caractérisé en ce que** ledit algorithme de configuration et ladite application maître sont chargés dans chaque calculateur (12,...,22) du réseau, l'exécution dudit algorithme de configuration par l'un des calculateurs constituant un moyen de configuration de ce dernier en calculateur maître.

3. Système selon la revendication 2, **caractérisé en ce que** chaque calculateur comporte en outre une application esclave exécutable sous le contrôle du calculateur maître (12) lorsque ce calculateur est configuré en esclave, pour la gestion locale de l'application de calcul, ladite application esclave comportant des moyens logiciels pour dialoguer avec la machine (10) de stockage.

4. Système selon la revendication 3, **caractérisé en ce que** lesdits moyens logiciels pour dialoguer avec la machine de stockage comporte des moyens pour l'échange de données selon un protocole de transfert de fichiers.

5. Système selon l'une quelconque des revendications 1 à 4, **caractérisé en ce que** chaque calculateur maître (12) comporte, stockés en mémoire, une signature électronique et des moyens de comparaison entre ladite signature et une signature électronique d'un calculateur esclave avec lequel il communique pour autoriser le lancement de l'application de calcul par ce dernier.

6. Système selon l'une quelconque des revendications 1 à 5, **caractérisé en ce que** l'algorithme de configuration comporte des moyens logiciel d'élaboration d'une interface (24) homme-machine convenant pour être affichée sur un écran de chaque calculateur pour la configuration desdits calculateurs.

7. Procédé de calcul au moyen d'un système informatique selon l'une quelconque des revendications 1 à 6, **caractérisé en ce qu'**il comporte les étapes de :
définition d'au moins un groupe de calculateurs par configuration pour chaque groupe d'un calculateur (12,...,22) en calculateur maître et des autres calculateurs en calculateurs esclaves ;
affectation, à chacun des calculateurs esclaves, d'une ou plusieurs applications de calcul et de données de calcul correspondantes ;
comparaison d'une signature électronique transmise par chaque calculateur esclave au calculateur maître avec une signature correspondante stockée dans cette dernière ; et, en cas de correspondance entre lesdites signatures ;
lancement, pour chaque calculateur esclave de la ou des applications de calcul en fonction de leur disponibilité, en utilisant les données de calcul correspondantes ; et
récupération des données résultant de l'exécution des applications réalisées en parallèles, dans chaque calculateur esclave.

8. Utilisation d'un procédé de calcul selon la revendication 7 pour le calcul de modélisations moléculaires à partir de données moléculaires stockées dans un serveur de données (10).
